# EUROPÄISCHE PATENTSCHRIFT

(11) **EP 3 835 729 B1**
(45) Veröffentlichungstag und Bekanntmachung des Hinweises auf die Patenterteilung: **02.03.2022**
(21) Anmeldenummer: 20152514.4
(22) Anmeldetag: 17.01.2020
(51) Int. Cl.: G01D 11/30

(54) **BEFESTIGUNGSELEMENT, SENSOREINHEIT MIT EINEM SENSOR UND EINEM BEFESTIGUNGSELEMENT, SENSOREINHEIT UND VERFAHREN ZUR BEFESTIGUNG EINER SENSOREINHEIT**
FIXING ELEMENT, SENSOR UNIT COMPRISING A SENSOR AND A FIXING ELEMENT, SENSOR UNIT AND METHOD FOR FIXING A SENSOR UNIT
ÉLÉMENT DE FIXATION, UNITÉ DE CAPTEUR DOTÉE D'UN CAPTEUR ET D'UN ÉLÉMENT DE FIXATION, UNITÉ DE CAPTEUR ET PROCÉDÉ DE FIXATION D'UNE UNITÉ DE CAPTEUR

(30) Priorität: 12.12.2019 EP 19215774
(43) Veröffentlichungstag der Anmeldung: 16.06.2021
(73) Patentinhaber: Thales Management & Services Deutschland GmbH, 71254 Ditzingen (DE)
(72) Erfinder: BREITWEG, Rolf, 70563 Stuttgart (DE)
(74) Vertreter: Kohler Schmid Möbus Patentanwälte

(56) Entgegenhaltungen:
- EP-A1- 3 428 596
- EP-B1- 2 247 971
- DE-A1-102017 216 811
- DE-A1-102018 211 503

## Beschreibung

### Hintergrund der Erfindung

Die Erfindung betrifft ein Befestigungselement zur Befestigung eines Sensors an einer zu überwachenden Struktur, insbesondere einer Schiene, eine Sensoreinheit mit einem solchen Befestigungselement, eine Sensoranordnung zur Befestigung der Sensoreinheit an einer zu überwachenden Struktur sowie ein Verfahren zur Anordnung der Sensoreinheit.

Befestigungselemente, die mittels adhäsiver Stoffe befestigt werden, sind aus dem Stand der Technik bereits bekannt und dienen der Anbringung von Komponenten, insbesondere von Sensoren, an Strukturen. Ein typisches Anwendungsgebiet hierfür sind Schienenüberwachungselemente. Die Komponenten des Schienenüberwachungselements, insbesondere Sensoren zur Messung von auf die Schiene wirkende Kräfte, können dabei ohne Schwächung der Struktur durch bspw. Bohrlöcher an der Schiene befestigt werden.

Aus der [1] und der [2] sind Befestigungselemente zur Befestigung von Photovoltaikmodulen an Strukturen mittels elastischer Klebstoffe bekannt geworden. Elastische Klebstoffe weisen zwar eine hohe Witterungs- und Alterungsbeständigkeit auf, gleichen jedoch ebenso Dehnungen und Bewegungen der Struktur aus und sind somit nicht geeignet, Sensoren zu befestigen, die auf die Struktur wirkende Kräfte messen sollen.

Daher werden Befestigungselemente von Schienenüberwachungselementen mit einem Sensor mittels Klebstoffen befestigt, die nach Aushärtung eine möglichst hohe Steifigkeit aufweisen. Insbesondere bei der Anbringung von Befestigungselementen an Schienen kommen dabei überwiegend thermische Klebeverfahren zum Einsatz.

Aus der [4] ist ein Verfahren zur Montage eines Schienenüberwachungselements unter Einsatz einer hitzeaktivierbaren Folie bekannt geworden. Die Verbindung wird dabei durch induktives Beheizen der Schiene hergestellt. Dazu wird jedoch ein erheblicher Energieeintrag in Form von Wärme benötigt, was zusätzlich zu den hohen Energiekosten eine Ausrüstung verlangt, die es ermöglicht, die benötigte Energie auch in abgelegenen und schwer zugänglichen Gleisabschnitten bereitzustellen. Die für das induktive Heizen benötigte schwere und sperrige Ausrüstung muss von den Fachkräften zum Einsatzort transportiert werden, was letztlich einen hohen logistischen Aufwand mit sich bringt.

Aus der [3] der Anmelderin ist ein Schienenüberwachungselement bekannt geworden, welches mittels eines thermisch aktivierbaren Klebstoffs an einer Schiene befestigt wird. Das Schienenüberwachungselement wird dabei an die Schiene gedrückt und der Klebstoff durch einen in der Klebeschicht befindlichen Heißdraht erhitzt, um die Klebeverbindung herzustellen. Bei diesem Verfahren erfolgt der Wärmeeintrag zur Aushärtung des Klebstoffs jedoch nur punktuell.

Aus der [5] ist ein Befestigungselement zur Befestigung eines Sensors an einer zu überwachenden Struktur gemäß dem Oberbegriff des Anspruchs 1 bekannt.

### Aufgabe der Erfindung

Es ist Aufgabe der Erfindung ein Befestigungselement und eine Sensoreinheit mit einem solchen Befestigungselement bereitzustellen, welches kostengünstig in der Herstellung und darüber hinaus kostengünstig und unter geringem Aufwand an einer zu überwachenden Struktur anzubringen ist.

### Beschreibung der Erfindung

Diese Aufgabe wird erfindungsgemäß gelöst durch ein Befestigungselement gemäß Patentanspruch 1, eine Sensoreinheit gemäß Patentanspruch 10, eine Sensoranordnung gemäß Patentanspruch 12 und ein Verfahren gemäß Patentanspruch 14.

Das erfindungsgemäße Befestigungselement weist ein Grundträgerelement, einen Dichtrahmen zur Abdichtung des Grundträgerelements gegenüber der Struktur, eine Kavität zur Aufnahme eines lichtaushärtenden Klebstoffs, wobei die Kavität an einer Seite durch das Grundträgerelement und umfangsseitig durch den Dichtrahmen begrenzt wird, und zumindest eine lichtabstrahlende, zum Einkoppeln von Lichtstrahlen in die Kavität. Darüber hinaus kann das Befestigungselement noch weitere Elemente, insbesondere eine Schutzabdeckung, aufweisen.

Das Grundträgerelement dient der Aufnahme einer Komponente, insbesondere eines Sensors, und ist besonders vorteilhaft in Form einer Rechteck-Platte ausgeführt. Andere Formen können sich aufgrund des zu befestigenden Sensors sowie der Oberfläche der Struktur, an der das Befestigungselement befestigt werden soll, ergeben. Insbesondere sind runde und/oder mehreckige Formen denkbar. Das Grundträgerelement ist zur Anordnung an einer zu überwachenden Struktur ausgebildet. Generell ist die Anordnung des Befestigungselements an allen Oberflächen denkbar. Im Folgenden wird, insbesondere beispielhaft, auf die Anordnung des Befestigungselements im Anwendungsbereich von Schienenüberwachungselementen eingegangen, wobei die zu überwachenden Strukturen insbesondere Schienen und Zugachsen darstellen. Die Aufzählung ist nicht abschließend zu verstehen.

Bei Anordnung an einer Schiene, wird das Befestigungselement bevorzugt im vertikalen Abschnitt des Schienenprofils (Schienenhals) angeordnet. Das Grundträgerelement ist in bevorzugter Einbaulage somit parallel zur Schiene positioniert. Dabei ist das Grundträgerelement in zumindest einem Teilabschnitt von der der Schiene beabstandet. Mit anderen Worten entsteht ein Zwischenraum zwischen dem Grundträgerelement und der Schiene.

An dem Grundträgerelement ist lösbar oder unlösbar der Dichtrahmen angeordnet, der das Grundträgerelement gegenüber der Struktur auf Abstand hält. Der Dichtrahmen dichtet den Zwischenraum zwischen dem Grundträgerelement und der Schiene, insbesondere vollumfänglich, ab und bildet zusammen mit dem Grundträgerelement eine Kavität aus. Der Dichtrahmen kann hierzu flexibel, insbesondere als Elastomer, besonders bevorzugt als Silikon, und/oder starr ausgebildet sein. Der Dichtrahmen kann einstückig mit dem Grundträgerelement ausgebildet sein. Eine flexible Ausbildung ist besonders vorteilhaft in Bezug auf ein möglichst spaltarmes Anliegen des Dichtrahmens an der Oberfläche der Struktur im Befestigungsbereich. Dies verbessert die Dichtwirkung des Dichtrahmens.

Die Kavität ist zwischen Grundträgerelement und Struktur ausgebildet und wird durch den Dichtrahmen in Umfangsrichtung begrenzt. Mit anderen Worten ist die Kavität an der dem Grundträgerelement zugewandten Seite überwiegend, insbesondere vollständig, geschlossen und an der der Struktur zugewandten Seite überwiegend, insbesondere vollständig, offen.

Die Kavität ist zur Aufnahme eines lichtaushärtenden Klebstoffs ausgebildet. Unter einem lichtaushärtenden Klebstoff wird ein adhäsives Verbindungsmittel verstanden, dass unter Einwirkung von Licht, insbesondere ultraviolettem Licht (UV-Licht) aushärtet.

Das Befestigungselement weist eine lichtabstrahlende Fläche zum Einkoppeln von Licht in die Kavität auf. Die lichtabstrahlende Fläche bildet eine Grenzfläche zur Kavität. Mit anderen Worten weist das Befestigungselement durch die Licht in die Kavität gestrahlt wird. Beispiele für eine lichtabstrahlende Fläche sind ein lichtdurchlässiges Leuchtdioden-Gehäuse, insbesondere eine LED-Linse, die zur Kavität gerichtete Oberfläche einer transparenten Schicht, in der der Leuchtmittel untergebracht sind oder die Oberfläche einer Lichtleitfolie oder einer Lichtleitplatte, wobei die Aufzählung nicht abschließend ist. Das eingestrahlte Licht kann dabei unmittelbar an der lichtabstrahlenden Fläche emittiert und/oder über lichtleitende Strukturen (Lichtleitfolie / Lichtleitplatte) zu der lichtabstrahlenden Fläche geleitet werden. Durch Einbringen von Licht in die Kavität bei Anordnung des Befestigungselements an der Struktur wird das Aushärten des lichtaushärtenden Klebstoffs und somit die Befestigung des Befestigungselements an der Struktur ermöglicht.

Dabei weist das Befestigungselement wenigstens eine Durchgangsausnehmung zum Einbringen des lichtaushärtenden Klebstoffs in die Kavität auf. Die wenigstens eine Durchgangsausnehmung kann dabei im Grundträgerelement und/oder im Dichtrahmen ausgebildet sein und verbindet die Kavität mit der Umgebung des Befestigungselements. Die Durchgangsausnehmung kann insbesondere in Form einer Lücke im Dichtrahmen ausgebildet sein. Die Durchgangsausnehmung weist besonders vorteilhaft eine lichte Weite von 1-30 Millimetern, insbesondere von 2-20 Millimetern, besonders bevorzugt von 5 - 10 Millimetern, auf. Hierdurch kann der Klebstoff besonders einfach mittels einer Einfüllvorrichtung, insbesondere einer Kartuschenpistole, in die Kavität eingefüllt werden.

Besonders bevorzugt ist eine Weiterentwicklung, bei der das Befestigungselement wenigstens eine weitere Durchgangsausnehmung und/oder eine Befüllungskontrolle aufweist. Eine weitere Durchgangsausnehmung ermöglicht bei besonders dicht an der Struktur anliegendem Dichtrahmen während des Befüllvorgangs mit Klebstoff das besonders einfache Entweichen der Luft aus der Kavität. Zudem ermöglicht eine weitere Ausnehmung einen Rückschluss auf den Befüllungsgrad der Kavität, da nach überwiegender, insbesondere vollständiger, Befüllung der Kavität überflüssiger Klebstoff aus der weiteren Durchgangsausnehmung ausquellen kann. Eine Befüllungskontrolle kann alternativ oder zusätzlich in Form eines teiltransparenten Bereichs, insbesondere eines klartransparenten Sichtfensterns, im Grundträgerelement und/oder im Dichtrahmen ausgebildet sein und zumindest einen Rückschluss auf den Befüllungsgrad der Kavität ermöglichen.

Weiterhin bevorzugt ist eine Ausführungsform, bei der das Befestigungselement mindestens eine Lichtquelle, insbesondere eine Leuchtdiode, zur direkten oder indirekten, zumindest teilweisen, insbesondere vollständigen, Ausleuchtung der Kavität aufweist. Die Lichtquelle ist bezüglich der lichtabstrahlenden Fläche so ausgerichtet, dass die Lichtemission überwiegend, insbesondere vollständig in die Kavität erfolgt. Mit anderen Worten ist die Leuchtwirkung der Lichtquelle unmittelbar und/oder mittelbar, insbesondere über eine Lichtleitfolie oder eine Lichtleitplatte, in die Kavität gerichtet. Die Lichtemission ist dabei insbesondere vom Grundträgerelement in Richtung derjenigen Seite der Kavität gerichtet, die dem Grundträgerelement gegenüberliegt.

Bei einer weiteren bevorzugten Ausführungsform weist das Befestigungselement eine Vielzahl an Lichtquellen auf, die voneinander beabstandet, insbesondere äquidistant, angeordnet sind. Dies ermöglicht eine besonders gleichmäßige und vollständige Ausleuchtung der Kavität.

Bevorzugt ist eine Ausführungsform, bei der die Lichtquellen innerhalb der Kavität des Befestigungselements angeordnet sind. Die Lichtquellen können dabei selbst die lichtabstrahlende Fläche aufweisen. Die Kavität wird bei dieser Ausführungsform durch die Lichtquellen direkt ausgeleuchtet. Besonders vorteilhaft ist die in Richtung der Kavität gerichtete Anordnung der Lichtquellen in einer Ebene, insbesondere am Grundträgerelement. Durch ebene Anordnung der Lichtquellen innerhalb der Kavität wird eine besonders gleichmäßige Ausleuchtung ermöglicht. Die lichtabstrahlende Fläche ist zwischen Kavität und Lichtquelle angeordnet und schützt die Lichtquelle vor dem unmittelbaren Kontakt mit dem lichtaushärtenden Klebstoff. Die lichtabstrahlende Fläche kann insbesondere lichtstreuend, besonders bevorzugt diffus streuend, ausgebildet sein, um einen möglichst großen Beleuchtungsbereich der Lichtquelle zu ermöglichen. Die Aushärtung des lichtaushärtenden Klebstoffs erfolgt hierdurch besonders gleichmäßig und vollständig. Die Lichtquellen verbleiben dabei nach Aushärtung des Klebstoffs als sogenannte "lost elements" innerhalb der Kavität.

Weiterhin bevorzugt ist eine Ausführungsform des Befestigungselements, bei der das Grundträgerelement eine transparente Schicht umfasst, in der die Lichtquelle angeordnet ist. Die Lichtquelle ist in der transparenten Lage derart ausgerichtet, um Licht direkt in die Kavität zu transmittieren. Die transparente Schicht bildet zusammen mit der Lichtquelle eine "Leuchtschicht", so dass die Kavität von einer ebenen Fläche begrenzt wird. Hierdurch wird das Befüllen der Kavität erleichtert.

Bevorzugt ist eine Weiterbildung des Befestigungselements, bei der die Lichtquelle dazu ausgebildet ist, UV-Licht zu emittieren. Hierdurch wird eine besonders schnelle Aushärtung bei Verwendung von UV-Licht-aushärtendem Klebstoff begünstigt.

Besonders bevorzugt ist eine Ausführungsform, bei der das Befestigungselement wenigstens ein lichtleitendes Element zur lichtleitenden Verbindung der Lichtquelle mit der lichtabstrahlenden Fläche aufweist. Hierdurch kann die Lichtquelle von der Kavität örtlich beabstandet angeordnet werden. Mit anderen Worten kann die Lichtquelle außerhalb der Kavität am Befestigungselement angeordnet werden. Die Lichtquelle emittiert Licht in ein lichtleitendes Element, insbesondere in eine lichtleitende Folie, wobei das lichtleitende Element wenigstens einen Lichtaustrittsbereich aufweist, der in die Kavität gerichtet ist. Mit anderen Worten wird die Kavität indirekt ausgeleuchtet. Das lichtleitende Element, insbesondere die Lichtleitfolie, weist dabei im Lichtaustrittsbereich die lichtabstrahlende Fläche auf, wodurch eine gleichmäßige Auskopplung von Licht ermöglicht wird. Dies begünstigt die Lichtverteilung in der Kavität.

In einer besonders bevorzugten Weiterbildung des Befestigungselements, ist die Lichtquelle in Umfangsrichtung des Dichtungsrahmens am und/oder im Dichtungsrahmen angeordnet. Der Dichtungsrahmen kann zumindest teilweise, insbesondere vollständig, transparent ausgebildet sein. Der Dichtungsrahmen kann auch die lichtabstrahlende Fläche aufweisen. Alternativ kann das Licht durch den transparenten Rahmen in ein an den Rahmen angrenzendes lichtleitendes Element eingekoppelt werden. Hierdurch kann das Grundträgerelement unverändert bleiben, was sich besonders günstig auf bestehende Fertigungsprozesse auswirkt.

Alternativ oder zusätzlich kann der Dichtungsrahmen Durchgangsausnehmungen aufweisen, die zur Anordnung der Lichtquelle ausgebildet sind. In besonders vorteilhafter Ausgestaltung wird die Lichtquelle in und/oder an zumindest einer zur Befüllung der Kavität ausgebildeten Durchgangsausnehmung nach Befüllung der Kavität angeordnet.

In einer bevorzugten Ausführungsform des Befestigungselements, weist der Dichtungsrahmen an seiner der Struktur zugewandten Seite ein Haftmittel, insbesondere ein Harz oder ein Klebeband, auf. Hierdurch wird ein provisorisches Anheften des Befestigungselements an der Struktur ermöglicht und das Einfüllen des Klebstoffs sowie der Aushärtevorgang vereinfacht.

Besonders bevorzugt ist eine Weiterbildung des Befestigungselements, bei der die Lichtquelle lösbar und/oder lose an dem Grundträgerelement und/oder dem Dichtungsrahmen angeordnet ist. Hierbei kann die Lichtquelle besonders vorteilhaft für die Dauer der Aushärtung des Klebstoffs an dem Befestigungselement angeordnet und anschließend abgenommen werden. Hierdurch verbleiben keine "lost elements" am oder im Befestigungselement und die Lichtquelle kann besonders vorteilhaft wiederverwendet werden.

Alternativ oder zusätzlich kann die Lichtquelle neben dem Befestigungselement positioniert und lediglich, insbesondere zeitlich begrenzt, über das wenigstens eine lichtleitende Element mit dem Befestigungselement, insbesondere der Kavität verbunden sein. Hierbei kann vorgesehen sein, dass ein erstes lichtleitendes Element an der Lichtquelle und ein zweites lichtleitendes Element an dem Befestigungselement angeordnet ist, wobei für die Dauer der Beleuchtung der Kavität das erste lichtleitende Element an dem zweiten lichtleitenden Element angeordnet ist.

Bevorzugt ist weiterhin eine Ausführungsform, bei der an dem Befestigungselement, insbesondere an dem Grundträgerelement und/oder an dem Dichtungsrahmen, eine Schutzabdeckung angeordnet ist. Die Schutzabdeckung kann lösbar und/oder unlösbar an dem Befestigungselement anordenbar sein. Insbesondere kann zur Anordnung der Schutzabdeckung an dem Befestigungselement eine Rastvorrichtung und/oder eine Verschraubvorrichtung vorgesehen sein. Durch eine Schutzabdeckung kann das Befestigungselement und daran angeordnete Komponenten vor unbefugtem Zugriff und Witterungs- und/oder Umgebungseinflüssen effektiv geschützt werden.

Die erfindungsgemäße Sensoreinheit weist ein Befestigungselement und einen Sensor auf. Der Sensor kann dabei lösbar oder unlösbar an dem Befestigungselement angeordnet sein. Der Sensor ist an der der Kavität abgewandten Seite des Grundträgerelements angeordnet. Hierdurch wird besonders vorteilhaft ein Anordnen des Sensors am Befestigungselement im Anschluss an die Anordnung des Befestigungselements an der Struktur ermöglicht. Generell ist jedoch ebenso denkbar, dass der Sensor bereits bei Anordnung des Befestigungselements an der Struktur an dem Grundträgerelement angeordnet ist.

Das Befestigungselement ist dazu ausgebildet, verschiedenste Sensoren anzuordnen. Unter einem Sensor wird jedwede Art von Messfühler und/oder Detektor zur Erfassung einer physikalischen oder chemischen Eigenschaft verstanden. Beispielsweise, aber nicht abschließend, seien Temperaturfühler, Dehnungsmesser, Luftfeuchtigkeit, Druck oder Ionenstärke genannt.

Bei einer bevorzugten Weiterbildung der Sensoreinheit, handelt es sich bei dem Sensor um einen Dehnungssensor, vorzugsweise um ein Schienenüberwachungselement mit einer optischen Faser mit Faser Bragg Gitter.

Die erfindungsgemäße Sensoranordnung weist eine Sensoreinheit und eine zu überwachenden Struktur auf. Die Sensoreinheit ist dabei so an der Struktur angeordnet, dass ein in die Kavität eingebrachter lichtausgehärteter Klebstoff eine Verbindung zwischen dem Grundträgerelements und der Struktur ausbildet. Mit anderen Worten ist die Kavität des Befestigungselements im angeordneten Zustand der Sensoreinheit an der Struktur mit lichtaushärtendem Klebstoff überwiegend, insbesondere vollständig, gefüllt.

Das erfindungsgemäße Verfahren zur Befestigung einer Sensoreinheit an der Struktur weist folgende Verfahrensschritte auf:
a) Anlegen der Sensoreinheit an die Struktur;
b) Einbringen des lichtaushärtenden Klebstoffs in die Kavität der Sensoreinheit;
c) Einbringen von Licht in die Kavität zum Zwecke der Aushärtung des Klebstoffs.

Die angegebene Reihenfolge ist besonders vorteilhaft in Bezug auf eine optimale Dosierung des Klebstoffs und das Ausfüllen der Kavität, da eine Minderdosierung effektiv verhindert und gleichzeitig ein Hervorquellen des Klebstoffs bei übermäßiger Dosierung verhindert werden kann.

Die Schritte des Verfahrens sind jedoch nicht auf die angegebene Reihenfolge beschränkt. Denkbar ist beispielsweise ebenso das Einbringen von lichtaushärtendem Klebstoff in die Kavität vor Anlegen der Sensoreinheit an die Struktur.

Bevorzugt ist eine Weiterbildung des erfindungsgemäßen Verfahrens bei der, insbesondere zwischen Verfahrensschritt b) und Verfahrensschritt c), die Lichtquelle an dem Befestigungselement angeordnet wird.

Bevorzugt ist eine Weiterbildung des erfindungsgemäßen Verfahrens bei der, insbesondere zwischen Verfahrensschritt b) und Verfahrensschritt c), die Lichtquelle neben dem Befestigungselement an dem lichtleitenden Element positioniert wird.

Bevorzugt ist eine Weiterbildung des erfindungsgemäßen Verfahrens bei der, insbesondere nach dem Verfahrensschritt c), die Lichtquelle von dem Befestigungselement entfernt wird.

Bevorzugt ist eine Weiterbildung des erfindungsgemäßen Verfahrens bei dem, insbesondere nach dem Verfahrensschritt c), eine Schutzabdeckung an dem Befestigungselement angeordnet wird.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine Sensoranordnung mit einer ersten Ausführungsform einer Sensoreinheit und einer zu überwachenden Struktur in einer Schnittansicht;
- Fig. 2: zeigt die erste Ausführungsform einer Sensoreinheit aus Fig. 1 in einer perspektivischen Darstellung, wobei das Befestigungselement eine einzelne Kavität aufweist;
- Fig. 3: zeigt eine zweite Ausführungsform einer Sensoreinheit in einer perspektivischen Darstellung, wobei das Befestigungselement zwei Kavitäten aufweist;
- Fig. 4a-d: zeigen die verschiedenen Verfahrensschritte eines erfindungsgemäßen Verfahrens zur Befestigung einer Sensoranordnung mit einer Sensoreinheit gemäß einer dritten Ausführungsform in einer Schnittansicht, wobei das Befestigungselement eine Kavität und eine rahmenseitige Durchgangsausnehmung aufweist;
- Fig. 5a-d: zeigen die verschiedenen Verfahrensschritte eines erfindungsgemäßen Verfahrens zur Befestigung einer Sensoreinheit gemäß einer vierten Ausführungsform in einer Schnittansicht, wobei das Befestigungselement eine Kavität und eine grundträgerelementseitige Durchgangsausnehmung aufweist;
- Fig. 6a-d: zeigen die verschiedenen Verfahrensschritte eines erfindungsgemäßen Verfahrens zur Befestigung einer Sensoreinheit gemäß einer fünften Ausführungsform in einer Schnittansicht, wobei das Befestigungselement zwei Kavitäten mit einer rahmenseitigen und einer grundträgerelementseitigen Durchgangsausnehmung aufweist.

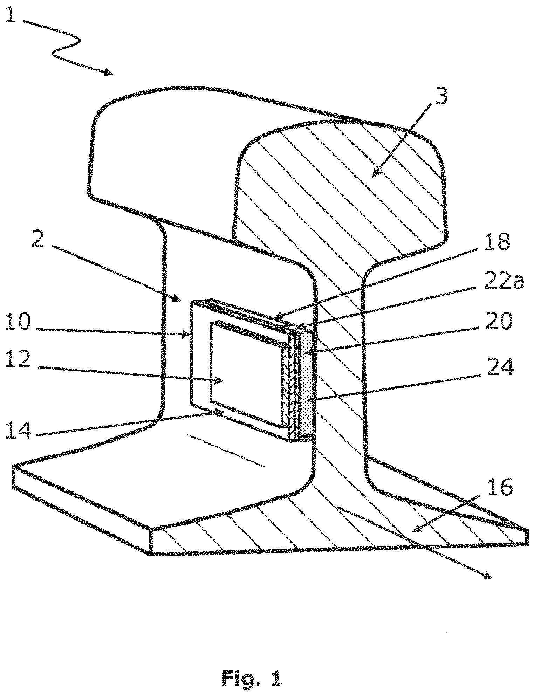

**Fig. 1** zeigt eine Sensoranordnung **1** mit einer Sensoreinheit **2,** die an einer Schiene als zu überwachender Struktur **3** angeordnet ist. Die Sensoreinheit 2 weist ein Befestigungselement **10** und einen Sensor **12** auf, der auf dem Befestigungselement 10 montiert ist. Die Struktur 3 weist einen vertikalen Abschnitt (Schienenhals) auf, an dem die Sensoreinheit 2 angebracht ist. Die Anbringung der Sensoreinheit 2 stellt dabei keine hohen Anforderungen an die darunterliegende Struktur und ist hinsichtlich des Anordnungsbereichs flexibel. Das Befestigungselements 10 kann bspw. so an der Struktur 3 angebracht werden, dass die die Kontaktfläche des Befestigungselements 10 an der Struktur 3 parallel oder in einem geneigten Winkel zur Wirkungsrichtung der Schwerkraft angeordnet ist. Mit anderen Worten ist bei Einbaulage seitlich an der Struktur 3 die Montagefläche im Wesentlichen vertikal ausgerichtet. Darüber hinaus sind jedoch auch andere Einbaulagen möglich.

Das Befestigungselement 10 weist ein plattenartiges Grundträgerelement **14** auf und ist parallel zur Erstreckungsrichtung **16** der Struktur 3 am vertikalen Schienenabschnitt angeordnet. Ein Dichtrahmen **18** ist an dem Grundträgerelement 14 angeordnet und liegt an der Struktur 3 überwiegend, insbesondere vollständig, formschlüssig an. Der Dichtrahmen 18, das Grundträgerelement 14 und die Struktur 3 begrenzen eine Kavität **20.** Der Sensor 12 ist an der der Kavität gegenüberliegenden Stelle auf dem Grundträgerelement 14 angebracht.

Der Dichtrahmen 18 weist eine Rahmen-Durchgangsausnehmung **22a** auf, die zur Befüllung der Kavität 20 mit lichtaushärtendem Klebstoff **24** ausgebildet ist. Die Rahmen-Durchgangsausnehmung 22a ist nach vollständigem Befüllen der Kavität 20 vorzugsweise ebenfalls mit Klebstoff 24 gefüllt. Dies lässt Rückschlüsse auf den Befüllungsgrad der Kavität 20 zu.

Die Kavität 20 ist in Fig. 1 bereits vollständig mit lichtausgehärtetem Klebstoff 24 gefüllt, der das Verbindungsmittel zwischen Befestigungselement 14 und der Struktur 3 darstellt.

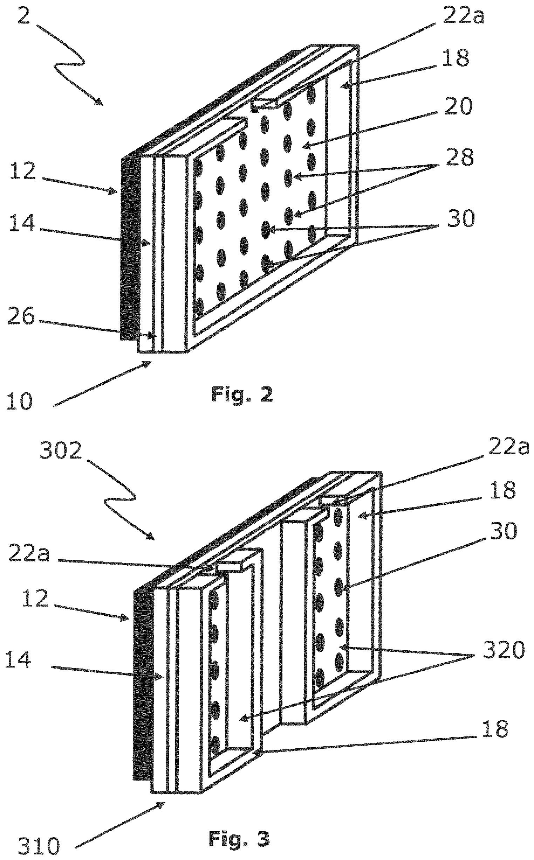

**Fig. 2** zeigt die erste Ausführungsform der Sensoreinheit 2 aus Fig. 1 in einer perspektivischen Ansicht mit Blick auf die Montageseite des Befestigungselements 10. Der Dichtrahmen 18 weist die Rahmen-Durchgangsausnehmung 22a am oberen Umfang des Dichtrahmens 18 auf. Die Begriffe "oben" und "unten" beziehen sich auf eine Einbaulage in Wirkungsrichtung der Schwerkraft an einer sich überwiegend vertikal erstreckenden Kontaktfläche. Die in Fig. 2 gezeigte Anordnung der Rahmen-Durchgangsausnehmung 22a am oberen Umfang des Dichtrahmens 18 ermöglicht besonders vorteilhaft das Einfüllen des Klebstoffs 24 (in Fig. 2 nicht gezeigt) unter Nutzung der Schwerkraft. Generell ist eine Ausbildung der Rahmen-Durchgangsausnehmung 22a an einer beliebigen Stelle des Dichtrahmens 18 denkbar.

Das Grundträgerelement 14 ist in der gezeigten Ausführungsform mehrlagig ausgebildet und weist eine transparente Schicht **26** mit einer lichtabstrahlenden Fläche **28** auf. Die lichtabstrahlende Fläche 28 ist in die Kavität 20 gerichtet.

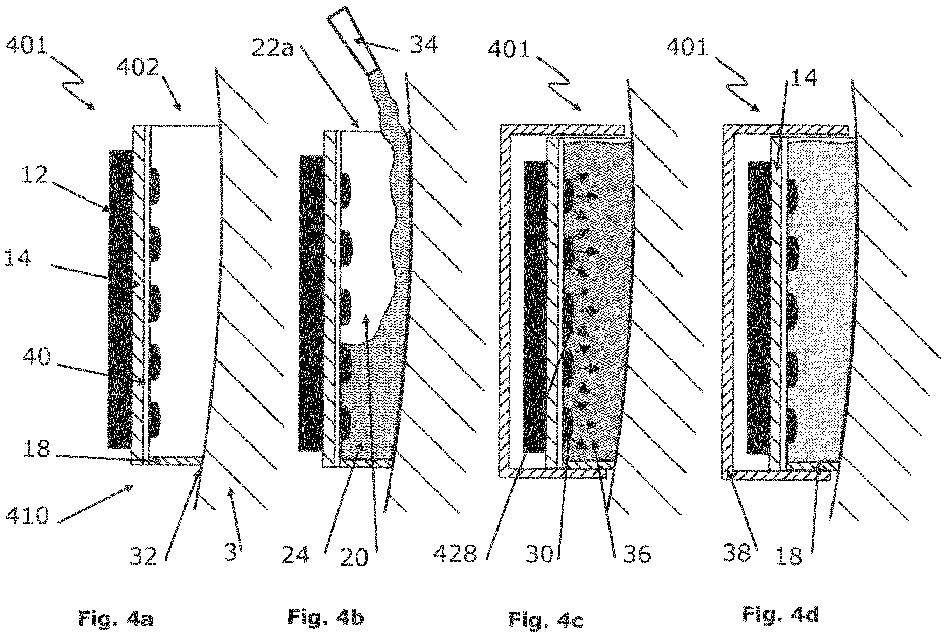

Die transparente Schicht 26 weist einige im Inneren der transparenten Schicht angeordnete Lichtquellen **30** (schwarz dargestellt) auf, die äquidistant über die am Grundträgerelement 14, insbesondere der transparenten Schicht 26, ausgebildete Verbindungsfläche zur Kavität 20 verteilt sind. Die transparente Schicht 26 weist dabei im Bereich jeder Lichtquelle 30 eine lichtabstrahlende Fläche 28 auf, die zur besseren Gleichverteilung des Lichts 36 (siehe Fig. 4c, 5c, 6c) in der Kavität 20 ausgebildet sind (aus Gründen der Übersichtlichkeit sind lediglich zwei Lichtquellen 30 und zwei lichtabstrahlende Flächen 28 mit Bezugszeichen versehen).

Die Kavität 20 weist in der gezeigten Ausführungsform an der dem Grundträgerelement 14 zugewandten Seite einen möglichst gleich großen Querschnitt wie an der der Struktur 3 zugewandten Seite auf. Hierdurch kann bei Anordnung des Befestigungselements 10 an der Struktur 3 in besonders günstiger Weise zwischen Klebstoff 24 und Struktur 3 die gleiche Haltekraft wie zwischen Klebstoff 24 und Grundträgerelement 14 ausgebildet werden und verhindert das Einbringen von zu viel Klebstoff 24 in die Kavität 20. In besonders vorteilhafter Weise können die Größen der Grenzflächen zwischen Klebstoff 24 und Grundträgerelement 14 und zwischen Klebstoff 24 und Struktur 3 an die Oberflächenbeschaffenheit des Grundträgerelements 14 und der Struktur 3 angepasst werden, sodass beispielsweise die Grenzfläche zwischen Klebstoff 24 und Grundträgerelement 14 größer oder kleiner ist als die Grenzfläche zwischen Klebstoff 24 und Struktur 3. Hierdurch kann die oberflächenbedingte Haltekraft über ein unterschiedliches Flächenverhältnis dennoch gleichmäßig ausgebildet werden.

**Fig. 3** zeigt eine zweite Ausführungsform einer Sensoreinheit **302.** Das Grundträgerelement **14** bildet zusammen mit zwei Dichtrahmen 18 zwei räumlich voneinander getrennte Kavitäten 320 aus. Durch Ausbildung von mehreren Kavitäten 20, die in dem in Fig. 3 gezeigten Beispiel nicht die gesamte Fläche des Grundträgerelements 14 abdecken, ist bei gleichen Abmaßen eines Befestigungselements **310,** die Anzahl der Lichtquellen 30 sowie die Menge des benötigten Klebstoffs 24 (in Fig. 3 nicht gezeigt) gegenüber der in Fig. 2 gezeigten Ausführungsform verringert. Jede der zwei Kavitäten 20 weist zwei Rahmen-Durchgangsausnehmungen 22a zum Einfüllen des Klebstoffs 24 (siehe Fig. 4c, 5c, 6c) auf (aus Gründen der Übersichtlichkeit ist lediglich eine Lichtquelle 30 mit einem Bezugszeichen versehen). Die Anordnung der Kavitäten 20 am Grundträgerelement 14 kann dabei besonders günstig an für den Sensor 12 funktionsrelevanten Stellen des Grundträgerelements 14 erfolgen.

Beispielhaft, aber nicht abschließend, ist die Anordnung der Kavitäten 20 bei Anordnung eines Dehnungssensors am Grundträgerelement 14 genannt. Hierbei kann durch Anordnung der Kavitäten 20 und damit durch eine Versteifung des Befestigungselements 310 nach Aushärten des Klebstoffs 24 im Bereich der am Grundträgerelement 14 angeordneten Dehnungsmessstellen des Dehnungssensors, eine besonders genaue Übertragung der Ausdehnung der Struktur (nicht gezeigt) an den Sensor 12 erfolgen.

**Fig. 4a****-d** zeigen eine Sensoranordnung **401** mit einer Sensoreinheit **402** umfassend ein Befestigungselement **410** mit integrierten Lichtquellen 30, die gemäß einem Verfahrensschritt a) an die Struktur 3 angelegt ist. Zum provisorischen Anheften der Sensoreinheit 402 an die Struktur 3 weist der Dichtrahmen 18 an seiner mit der Struktur 3 in Kontakt stehenden Seite ein Haftmittel **32,** z.B. in Form eines Klebestreifens auf. Hierdurch können die nachfolgenden Verfahrensschritte besonders einfach ausgeführt werden, da die Sensoreinheit 402 nicht dauerhaft gegen die Struktur 3 gedrückt werden muss. Alternativ oder zusätzlich kann ein händisches oder maschinelles Anpressen der Sensoreinheit 402 vorgesehen sein.

**Fig. 4b** zeigt das Einfüllen des Klebstoffs 24 in die Kavität 20 gemäß Verfahrensschritt b) über die an der Oberseite des Dichtrahmens 18 ausgebildete Rahmen-Durchgangsausnehmung 22a. Der Klebstoff 24 wird mittels einer Kartusche **34** bereitgestellt. Generell kann der Klebstoff 24 auf verschiedene Art und Weise bereitgestellt werden, das Einbringen mittels einer Kartusche 34 ist hinsichtlich der Dosierung des Klebstoffs 24 besonders vorteilhaft.

**Fig. 4c** zeigt das Emittieren von Lichtstrahlen **36** in die Kavität 20 gemäß einem Verfahrensschritt d) zur Aushärtung des lichtaushärtenden Klebstoffs 24. Die Sensoreinheit 401 gemäß Fig.4a-d weist dazu die Lichtquellen 30 auf, die im Inneren der Kavität 20 angeordnet sind. Lichtabstrahlenden Flächen **428** sind unmittelbar an den Lichtquellen 30, insbesondere in Form eines Gehäuses, besonders bevorzugt in Form einer Epoxidharzlinse, angeordnet (aus Gründen der Übersichtlichkeit ist lediglich eine Lichtquelle 30, eine lichtabstrahlende Fläche 428 und ein repräsentativer Lichtstrahl 36 mit einem Bezugszeichen versehen). Zur Energieversorgung der Lichtquellen 30 weist die Sensoreinheit 402 eine integrierte Batterie (nicht gezeigt) auf, welche über schaltbare elektrische Leiter **40** (beispielsweise in Form einer Leiterplatte) mit den Lichtquellen 30 verbunden ist. Nach Einfüllen des Klebstoffs 24 werden die Lichtquellen 30 eingeschalten. Die Batterie (nicht gezeigt) hat dabei eine elektrische Kapazität, die die Energie für die zur Aushärtung des Klebstoffs 24 benötigte Beleuchtungsdauer durch die Lichtquellen 30 bereitstellt. Nach Aushärten des Klebstoffs 24 verbleiben die Lichtquellen 30 sowie die Batterie (nicht gezeigt) als sogenannte "lost elements" an der Sensoreinheit 402. Generell ist ebenso eine externe Stromzufuhr denkbar. Ebenso ist denkbar, falls der Sensor 12 selbst eine Stromversorgung umfasst, die Lichtquellen 30 über die zum Betrieb des Sensors 12 vorgesehene Stromversorgung (nicht gezeigt) mit Energie zu versorgen.

Die Sensoreinheit 402 weist eine an dem Befestigungselement 410, insbesondere dem Grundträgerelement 14 und dem Dichtrahmen 18, angeordnete Schutzabdeckung **38** auf. Die Schutzabdeckung 38 ist gemäß der Ausführungsform aus Fig.4c und Fig.4d mittels Presssitz an der Sensoreinheit 402 angeordnet.

**Fig. 4d** zeigt die Sensoranordnung 401 im finalen Zustand mit ausgehärtetem Klebstoff 24.

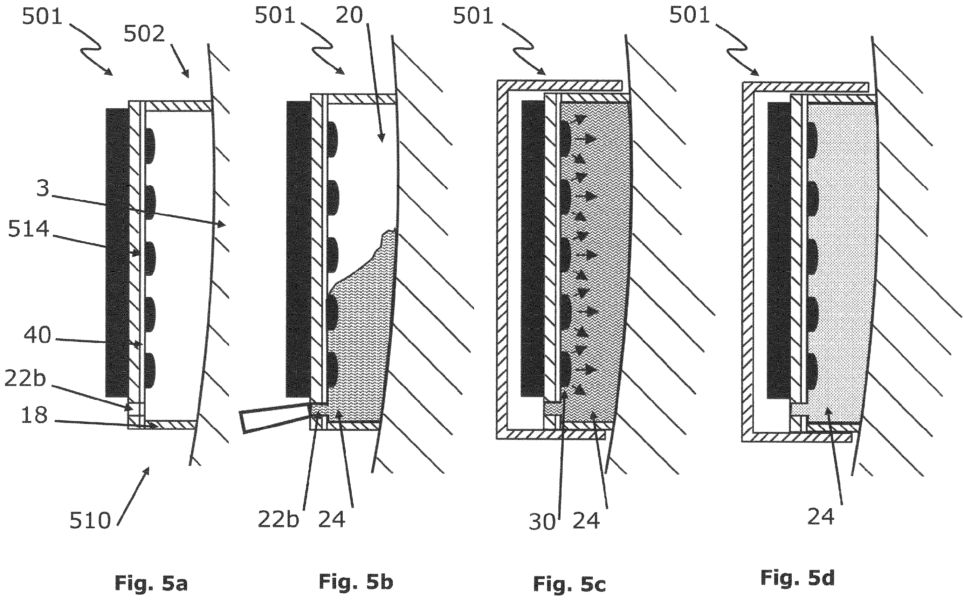

**Fig. 5a****-d** zeigen ein Verfahren zur Befestigung einer Sensoreinheit **502** gemäß einer vierten Ausführungsform an der Struktur 3, um eine Sensoranordnung **501** zu erhalten. Das Befestigungselement **510** weist den vollständig umlaufenden Dichtrahmen 18 auf. Eine Träger-Durchgangsausnehmung **22b** ist im Grundträgerelement **514** und der Leiterplatte 40 ausgebildet.

**Fig. 5b** zeigt das Einfüllen des lichtaushärtenden Klebstoffs 24 in die Kavität 20 über die Träger-Durchgangsausnehmung 22b im Grundträgerelement 514, wodurch der Füllvorgang besser durchführbar ist, weil eine Kartusche (lichtdicht) leichter angesetzt werden kann.

**Fig. 5c** zeigt das Aushärten des Klebstoffs 24 durch Lichteinstrahlung mittels der Lichtquellen 30.

Nach Aushärten des Klebstoffs 24 kann die Lichteinstrahlung beendet werden **(****Fig. 5d****)**

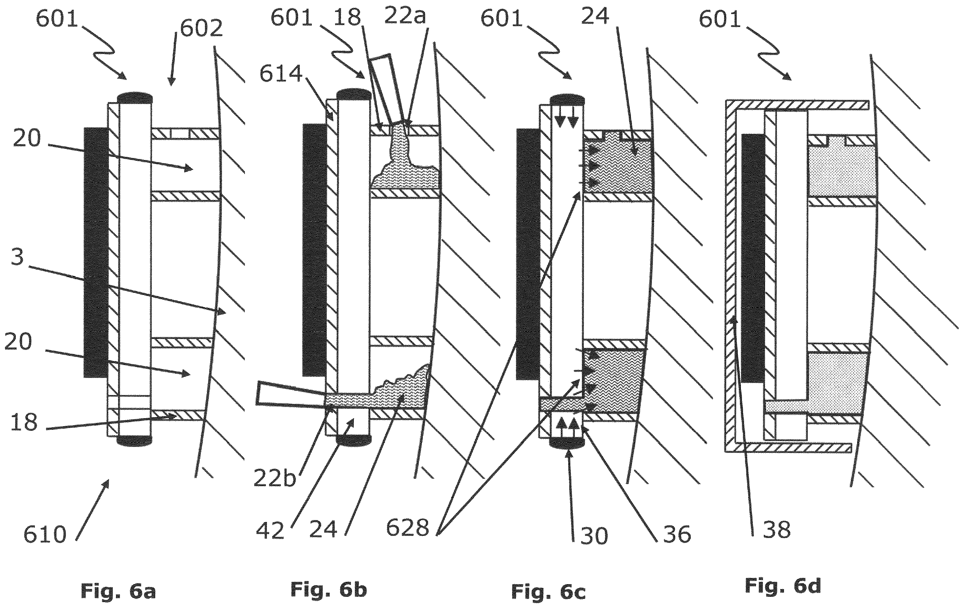

**Fig. 6a****-d** zeigen ein Verfahren zur Bereitstellung einer Sensoranordnung **601** durch Befestigung einer Sensoreinheit **602** gemäß einer fünften Ausführungsform an der Struktur 3.

Ein Befestigungselement **610** weist ein lichtleitendes Element **42** zwischen einem Grundträgerelement **614** und zwei Kavitäten 20 auf. Am Umfang des lichtleitendes Element 42 sind Lichtquellen 30 lösbar angeordnet. Die Lichtquellen 30 emittieren Lichtstrahlen 36 in das lichtleitende Element 42. Das lichtleitende Element 42 ist dazu ausgebildet, die durch die Lichtquellen 30 eingeleiteten Lichtstrahlen 36 durch das lichtleitende Element 42 zu den Kavitäten 20 zu leiten und in die Kavitäten auszukoppeln. Dazu weist das lichtleitende Element 42 in den Bereichen der Kavitäten 20 lichtabstrahlende Flächen **628** auf. Über die lichtabstrahlenden Flächen 628 treten die eingeleiteten Lichtstrahlen 36 wieder aus dem lichtleitenden Element 42 aus (Fig. 6c) . Die Kavitäten 20 werden dementsprechend indirekt durch die Lichtquellen 30, mittels einer Lichteinkopplung von außen, ausgeleuchtet. Die Lichteinkopplung in das lichtleitende Element 42 erfolgt dabei zumindest an einer Stelle, insbesondere an mehreren Stellen, besonders bevorzugt vollumfänglich an, dem lichtleitenden Element 42.

**Fig. 6b** zeigt die Befüllung der Kavitäten 20 durch eine Rahmen-Durchgangsausnehmung 22a und eine Träger-Durchgangsausnehmung 22b. Die Rahmen-Durchgangsausnehmung 22a ist dabei in dem Dichtrahmen 18, die Träger-Durchgangsausnehmung 22b ist im Grundträgerelement 614 und dem lichtleitenden Element 42 ausgebildet. Ein Dichtrahmen 18 ist umlaufend ausgebildet und weist im gezeigten Beispiel keine Durchgangsausnehmung auf. Es ist jedoch auch möglich, beide Kavitäten 20 durch Rahmen-Durchgangsausnehmungen 22a in den entsprechenden Dichtungsrahmen 18 und/oder durch entsprechend positionierte Träger-Durchgangsausnehmungen 22b im Grundträgerelement 614 zu befüllen.

**Fig. 6c** zeigt den Aushärtevorgang des lichtaushärtenden Klebstoffs 24 nach der Befüllung der Kavitäten 20. Das lichtleitende Element 42 kann dabei zur Auskopplung der Lichtstrahlen 36 in Richtung der Struktur 3 Nano- und/oder Mikrostrukturen, insbesondere im Bereich der lichtabstrahlenden Fläche 628, aufweisen, um eine möglichst homogene Ausleuchtung der Kavitäten 20 zu ermöglichen. Die Energieversorgung der Lichtquellen 30 erfolgt beispielsweise durch eine externe Batterie (nicht gezeigt).

**Fig. 6d** zeigt die Sensoranordnung 601 im fertigem Zustand (Sensoreinheit 602 an der Struktur 3 befestigt). Die Lichtquellen 30 wurden nach dem Aushärtevorgang von dem Befestigungselement 610 gelöst. Die Schutzabdeckung 38 ist mittels eines Presssitzes an dem Befestigungselement 610 angeordnet.

Unter Vornahme einer Zusammenschau aller Figuren der Zeichnung betrifft die Erfindung eine mittels eines lichtaushärtenden Klebstoffs 24 an einer Struktur 3 befestigbare Haltevorrichtung 10, 310, 410, 510, 610 für einen Sensor 12. Der lichtaushärtende Klebstoff 24 wird durch direkte und/oder indirekte Ausleuchtung der für die Aufnahme des lichtaushärtenden Klebstoffs 24 vorgesehenen Hohlräume 20 ausgehärtet. Die Erfindung betrifft weiterhin eine Sensoreinheit 2, 302, 402, 502, 602 mit einem Sensor 12 und einer Haltevorrichtung 10, 310, 410, 510, 610, eine Sensoranordnung 1, 401, 501, 601 mit einer Sensoreinheit 2 und einer Struktur 3, sowie ein Verfahren zur Bereitstellung einer Anordnung 1, 401, 501, 601.

### Bezugszeichenliste

- 1, 401, 501, 601: Sensoranordnung;
- 2, 302, 402, 502, 602: Sensoreinheit;
- 3: Struktur;
- 10, 310, 410, 510, 610: Befestigungselement;
- 12: Sensor;
- 14, 514, 614: Grundträgerelement;
- 16: Erstreckungsrichtung der Struktur;
- 18: Dichtrahmen;
- 20, 320: Kavität;
- 22a: Rahmen-Durchgangsausnehmung;
- 22b: Träger-Durchgangsausnehmung;
- 24: Lichtaushärtender Klebstoff;
- 26: Transparente Schicht;
- 28, 428, 628: Lichtabstrahlende Fläche;
- 30: Lichtquelle;
- 32: Haftmittel;
- 34: Kartusche;
- 36: Lichtstrahlen;
- 38: Schutzabdeckung;
- 40: Schaltbare elektrische Leiter/Leiterplatte
- 42: Lichtleitendes Element.

### Literaturliste

[1] Elastisches Kleben - Reduzierung der Systemkosten in der Solarindustrie; Ausgabe 6 / 2011 November - Dezember: Sonnenenergie; Seite 50, 51.
[2] Erneuerbare Energien - Dichten / Kleben / Vergießen - Photovoltaik-Module; OTTO-Chemie; https://www.otto-chemie.de/de/erneuerbare-energien.
[3] Europäische Patentanmeldung 19180254.5;
[4] DE 10 2017 216 811 A1.
[5] EP 3 428 596 A1

## Patentansprüche

1. Befestigungselement (10, 310, 410, 510, 610) zur Befestigung eines Sensors (12) an einer zu überwachenden Struktur (3), wobei das Befestigungselement (10, 310, 410, 510, 610) aufweist:
- ein Grundträgerelement (14, 514, 614);
- einen Dichtrahmen (18) zur Abdichtung des Grundträgerelements (14, 514, 614) gegenüber der Struktur (3);
- eine Kavität (20, 320) zur Aufnahme eines lichtaushärtenden Klebstoffs (24), wobei die Kavität (20, 320) an einer Seite durch das Grundträgerelement (14, 514, 614) und umfangsseitig durch den Dichtrahmen (18) begrenzt wird;
- zumindest eine lichtabstrahlende Fläche (28, 428, 628), zum Einkoppeln von Lichtstrahlen (36) in die Kavität (20, 320);
**dadurch gekennzeichnet, dass** das Befestigungselement (10, 310, 410, 510, 610) wenigstens eine Durchgangsausnehmung (22a, 22b) zum Einbringen des lichtaushärtenden Klebstoffs (24) in die Kavität (20, 320) aufweist.

2. Befestigungselement (10, 310, 410, 510, 610) nach Anspruch 1, aufweisend mindestens eine Lichtquelle (30), insbesondere eine Leuchtdiode, zur direkten oder indirekten zumindest teilweisen Ausleuchtung der Kavität (20, 320).

3. Befestigungselement (10, 310, 410, 510, 610) nach Anspruch 2, wobei eine Vielzahl an Lichtquellen (30) voneinander beabstandet angeordnet sind, insbesondere äquidistant.

4. Befestigungselement (10, 310, 410, 510) nach Anspruch 2 oder 3, wobei die Lichtquellen (30) innerhalb der Kavität (20, 320) angeordnet sind.

5. Befestigungselement (10, 310) nach Anspruch 2 oder 3, wobei das Grundträgerelement (14) eine transparente Schicht (26) umfasst, in der die Lichtquelle (30) angeordnet ist.

6. Befestigungselement (10, 310, 410, 510, 610) nach einem der Ansprüche 2 bis 5, wobei die Lichtquelle (30) dazu ausgebildet ist, UV-Licht zu emittieren.

7. Befestigungselement (610) nach einem der Ansprüche 2 bis 6, aufweisend ein lichtleitendes Element (42) zur lichtleitenden Verbindung der Lichtquelle (30) mit der lichtabstrahlenden Fläche (628).

8. Befestigungselement (610) nach Anspruch 7, wobei die Lichtquelle (30) in Umfangsrichtung des Dichtungsrahmens (18) am und/oder im Dichtungsrahmen (18) angeordnet ist.

9. Befestigungselement (610) nach Anspruch 2 bis 8, wobei die Lichtquelle (30) lösbar an dem Grundträgerelement (614) und/oder dem Dichtungsrahmen (18) angeordnet ist.

10. Sensoreinheit (2, 302, 402, 502, 602) mit einem Sensor (12) und einem Befestigungselement (10, 310, 410, 510, 610) gemäß einem der vorhergehenden Ansprüche, wobei der Sensor (12) auf der der Kavität (20, 320) gegenüberliegenden Seite des Grundträgerelements (14, 514, 614) angeordnet ist.

11. Sensoreinheit nach Anspruch 10, wobei es sich bei dem Sensor (12) um einen Dehnungssensor handelt, vorzugsweise um ein Schienenüberwachungselement mit einer optischen Faser mit Faser Bragg Gitter.

12. Sensoranordnung (1, 401, 501, 601) mit einer Sensoreinheit (2, 302, 402, 502, 602) gemäß Anspruch 10 oder 11 und einer zu überwachenden Struktur (3), wobei die Sensoreinheit (2, 302, 402, 502, 602) so an der Struktur (3) positioniert ist, dass die Kavität (20, 320) der Sensoreinheit (2, 302, 402, 502, 602) an der dem Grundträgerelement (14, 514, 614) gegenüberliegenden Seite von der Struktur (3) begrenzt wird und wobei die Kavität (20, 320) zumindest teilweise mit einem lichtaushärtenden, insbesondere UV-Licht-aushärtenden, Klebstoff (24) gefüllt ist.

13. Sensoranordnung nach Anspruch 12, wobei eine Leuchteinrichtung mit zumindest einer Lichtquelle (30) an der Sensoreinheit (602) anordenbar, insbesondere befestigbar, ist und wobei die Leuchteinrichtung zur unmittelbaren und/oder mittelbaren Ausleuchtung der Kavität (20, 320) ausgebildet ist.

14. Verfahren zur Befestigung einer Sensoreinheit (2, 302, 402, 502, 602) gemäß Patentanspruch 10 oder 11 an einer Struktur (3), wobei das Verfahren folgende Verfahrensschritte aufweist:
a) Anlegen der Sensoreinheit (2, 302, 402, 502, 602) an die Struktur (3);
b) Einbringen des lichtaushärtenden Klebstoffs (24) in die Kavität (20, 320) der Sensoreinheit (2, 302, 402, 502, 602);
c) Einbringen von Licht (36) in die Kavität (20, 320) zum Zwecke der Aushärtung des Klebstoffs (24);

## Claims

1. Fastening element (10, 310, 410, 510, 610) for fastening a sensor (12) to a structure (3) to be monitored, the fastening element (10, 310, 410, 510, 610) having:
- a base support element (14, 514, 614);
- a sealing frame (18) for sealing the base support element (14, 514, 614) with respect to the structure (3);
- a cavity (20, 320) for receiving a light-curing adhesive (24), the cavity (20, 320) being delimited on one side by the base support element (14, 514, 614) and peripherally by the sealing frame (18);
- at least one light-emitting surface (28, 428, 628) for coupling light beams (36) into the cavity (20, 320);
**characterized in that** the fastening element (10, 310, 410, 510, 610) has at least one passage recess (22a, 22b) for introducing the light-curing adhesive (24) into the cavity (20, 320).

2. Fastening element (10, 310, 410, 510, 610) according to claim 1, having at least one light source (30), in particular a light-emitting diode, for directly or indirectly at least partially illuminating the cavity (20, 320).

3. Fastening element (10, 310, 410, 510, 610) according to claim 2, wherein a plurality of light sources (30) are arranged at a distance from one another, in particular equidistantly.

4. Fastening element (10, 310, 410, 510) according to either claim 2 or claim 3, wherein the light sources (30) are arranged within the cavity (20, 320).

5. Fastening element (10, 310) according to either claim 2 or claim 3, wherein the base support element (14) comprises a transparent layer (26) in which the light source (30) is arranged.

6. Fastening element (10, 310, 410, 510, 610) according to any of claims 2 to 5, wherein the light source (30) is designed to emit UV light.

7. Fastening element (610) according to any of claims 2 to 6, having a light-conducting element (42) for connecting the light source (30) to the light-emitting surface (628) in a light-conducting manner.

8. Fastening element (610) according to claim 7, wherein the light source (30) is arranged in the peripheral direction of the sealing frame (18) on and/or in the sealing frame (18).

9. Fastening element (610) according to claims 2 to 8, wherein the light source (30) is detachably arranged on the base support element (614) and/or on the sealing frame (18).

10. Sensor unit (2, 302, 402, 502, 602) having a sensor (12) and a fastening element (10, 310, 410, 510, 610) according to any of the preceding claims, wherein the sensor (12) is arranged on the side of the base support element (14, 514, 614) which is opposite the cavity (20, 320).

11. Sensor unit according to claim 10, wherein the sensor (12) is a strain sensor, preferably a rail monitoring element having an optical fiber comprising fiber Bragg grating.

12. Sensor arrangement (1, 401, 501, 601) having a sensor unit (2, 302, 402, 502, 602) according to either claim 10 or claim 11 and a structure (3) to be monitored, wherein the sensor unit (2, 302, 402, 502, 602) is positioned on the structure (3) in such a way that the cavity (20, 320) of the sensor unit (2, 302, 402, 502, 602) is delimited from the structure (3) on the side opposite the base support element (14, 514, 614) and wherein the cavity (20, 320) is at least partially filled with a light-curing, in particular UV-light-curing, adhesive (24).

13. Sensor arrangement according to claim 12, wherein a lighting device having at least one light source (30) can be arranged, in particular fastened, on the sensor unit (602) and wherein the lighting device is designed to directly and/or indirectly illuminate the cavity (20, 320).

14. Method for fastening a sensor unit (2, 302, 402, 502, 602) according to either claim 10 or claim 11 to a structure (3), wherein the method comprises the following method steps:
a) applying the sensor unit (2, 302, 402, 502, 602) to the structure (3);
b) introducing the light-curing adhesive (24) into the cavity (20, 320) of the sensor unit (2, 302, 402, 502, 602);
c) introducing light (36) into the cavity (20, 320) for the purpose of curing the adhesive (24).

## Revendications

1. Elément de fixation (10, 310, 410, 510, 610) conçu pour fixer un capteur (12) à une structure (3) soumise à surveillance, ledit élément de fixation (10, 310, 410, 510, 610) comprenant :
- un élément de support de base (14, 514, 614) ;
- un cadre d'étanchement (18), destiné à assurer l'étanchéité dudit élément de support de base (14, 514, 614) par rapport à ladite structure (3) ;
- une cavité (20, 320) affectée à la réception d'un adhésif photodurcissant (24), laquelle cavité (20, 320) est délimitée, d'un côté, par ledit élément de support de base (14, 514, 614), et par ledit cadre d'étanchement (18) du côté périphérique ;
- au moins une surface rayonnante (28, 428, 628) dévolue à l'introduction de faisceaux de lumière (36) dans ladite cavité (20, 320) ;
**caractérisé par le fait que** ledit élément de fixation (10, 310, 410, 510, 610) comporte au moins un évidement de passage (22a, 22b) voué au déversement de l'adhésif photodurcissant (24) dans la cavité (20, 320).

2. Elément de fixation (10, 310, 410, 510, 610) selon la revendication 1, muni d'au moins une source lumineuse (30), en particulier d'une diode électroluminescente, en vue d'éclairer la cavité (20, 320) au moins en partie, directement ou indirectement.

3. Elément de fixation (10, 310, 410, 510, 610) selon la revendication 2, une multiplicité de sources lumineuses (30) étant agencées à distance les unes des autres, notamment à équidistance.

4. Elément de fixation (10, 310, 410, 510) selon la revendication 2 ou 3, les sources lumineuses (30) étant logées à l'intérieur de la cavité (20, 320).

5. Elément de fixation (10, 310) selon la revendication 2 ou 3, l'élément de support de base (14) incluant une couche transparente (26) dans laquelle la source lumineuse (30) est intégrée.

6. Elément de fixation (10, 310, 410, 510, 610) selon l'une des revendications 2 à 5, la source lumineuse (30) étant conçue pour émettre de la lumière UV.

7. Elément de fixation (610) selon l'une des revendications 2 à 6, doté d'un élément (42) guidant la lumière en vue de relier la source lumineuse (30) à la surface rayonnante (628), avec guidage de lumière.

8. Elément de fixation (610) selon la revendication 7, la source lumineuse (30) étant implantée sur et/ou dans le cadre d'étanchement (18) dans la direction périphérique dudit cadre d'étanchement (18).

9. Elément de fixation (610) selon les revendications 2 à 8, la source lumineuse (30) étant implantée, de manière libérable, sur l'élément de support de base (614) et/ou sur le cadre d'étanchement (18).

10. Unité détectrice (2, 302, 402, 502, 602) comprenant un capteur (12) et un élément de fixation (10, 310, 410, 510, 610) conforme à l'une des revendications précédentes, ledit capteur (12) étant situé du côté de l'élément de support de base (14, 514, 614) qui est tourné à l'opposé de la cavité (20, 320).

11. Unité détectrice selon la revendication 10, le capteur (12) se présentant comme un capteur de dilatation, de préférence comme un élément de surveillance de rails muni d'une fibre optique à réseau de Bragg sur fibre.

12. Ensemble de détection (1, 401, 501, 601) composé d'une unité détectrice (2, 302, 402, 502, 602) conforme à la revendication 10 ou 11, et d'une structure (3) soumise à surveillance, sachant que l'unité détectrice (2, 302, 402, 502, 602) est positionnée, sur la structure (3), de façon telle que la cavité (20, 320) de ladite unité détectrice (2, 302, 402, 502, 602) soit délimitée par ladite structure (3), du côté tourné à l'opposé de l'élément de support de base (14, 514, 614), et sachant que ladite cavité (20, 320) est au moins partiellement emplie d'un adhésif photodurcissant (24), durcissant notamment à la lumière UV.

13. Ensemble de détection selon la revendication 12, sachant qu'un dispositif d'éclairage doté d'au moins une source lumineuse (30) peut être implanté sur l'unité détectrice (602), notamment y être fixé, et sachant que ledit dispositif d'éclairage est réalisé en vue d'éclairer directement et/ou indirectement la cavité (20, 320).

14. Procédé de fixation, à une structure (3), d'une unité détectrice (2, 302, 402, 502, 602) conforme à la revendication 10 ou 11, ledit procédé incluant les étapes opératoires suivantes :
a) mise en place de l'unité détectrice (2, 302, 402, 502, 602) sur la structure (3) ;
b) déversement de l'adhésif photodurcissant (24) dans la cavité (20, 320) de ladite unité détectrice (2, 302, 402, 502, 602) ;
c) introduction de lumière (36) dans ladite cavité (20, 320), en vue du durcissement dudit adhésif (24).
